# EUROPÄISCHE PATENTSCHRIFT

(11) **EP 1 261 108 B1**
(45) Veröffentlichungstag und Bekanntmachung des Hinweises auf die Patenterteilung: **26.03.2008**
(21) Anmeldenummer: 02010220.8
(22) Anmeldetag: 16.05.2002
(51) Int. Cl.: H02K 7/116, H02K 11/04

(54) **Antriebsvorrichtung**
Driving device
Dispositif d'entraînement

(30) Priorität: 25.05.2001 DE 10125582
(43) Veröffentlichungstag der Anmeldung: 27.11.2002
(73) Patentinhaber: Webasto AG, 82131 Stockdorf (DE)
(72) Erfinder: Schwital, Ralf, 82110 Germering (DE); Meier, Bernhard, 85551 Kirchheim (DE); Kraus, Thomas, 82131 Gauting (DE)
(74) Vertreter: Wiese, Gerhard

(56) Entgegenhaltungen:
- DE-A- 4 242 641
- US-A- 4 857 812
- US-A- 6 111 378
- PATENT ABSTRACTS OF JAPAN Bd. 1996, Nr. 05, 31. Mai 1996 (1996-05-31) & JP 08 011730 A (KAYABA IND CO LTD), 16. Januar 1996 (1996-01-16)

## Beschreibung

Die vorliegende Erfindung betrifft eine Antriebsvorrichtung, insbesondere zum Verstellen eines Schiebedachs eines Fahrzeugs, entsprechend dem Oberbegriff des Anspruchs 1. (Siehe JP-A-08 011 730).

Eine Antriebsvorrichtung der eingangs genannten Art ist auch in US-Patent 6,162,142 beschrieben. Insbesondere wird hierbei eine Antriebsvorrichtung für ein Fahrzeugdach vorgeschlagen, bei welchem die Rotation der Abtriebswelle eines Elektromotors mittels eines Schneckengetriebes abgegriffen wird, welches mittels eines sowohl die Abtriebswelle als auch das Schneckengetriebe umgebenden Gehäuses in Kontakt mit der Abtriebswelle gehalten wird. Das Gehäuse weist ferner einen seitlich versetzt neben dem Schneckengetriebe liegenden Gehäusebereich auf, in welchem eine Platine angeordnet ist, auf welcher Bauelemente zum Ansteuern des Antriebsmotors angeordnet sind. Die einzelnen Baugruppen, insbesondere die Abtriebswelle und das von der Abtriebswelle angetriebene Schneckengetriebe, sind nicht gegenüber der Platine abgeschirmt, so dass die Gefahr besteht, dass üblicherweise zwischen der Abtriebswelle und dem Schnekkengetriebe vorgesehenes Schmiermittel zu der Platine und den darauf angeordneten Bauelementen hin austreten kann, was zu einer Beeinträchtigung der Funktion dieser Bauteile führen kann.

Bei der US-A-6 111 378 ist die Platine fest auf den aus Aluminium bestehenden Getriebegehäusedeckel laminiert. Bei der US-A-A4 857 812 ist die Platine fest auf die flache Innenseite eines Deckels eines Gehäuses geklebt.

Es ist eine Aufgabe der vorliegenden Erfindung, eine Antriebsvorrichtung der eingangs genannten Art zu schaffen, die kompakt aufgebaut ist und bei der dennoch auch über lange und intensive Nutzungsdauern hinweg ein zuverlässiger Betrieb der Vorrichtung gewährleistet ist.

Diese Aufgabe wird bei einer Antriebsvorrichtung der eingangs genannten Art mit den Merkmalen des Anspruchs 1 gelöst.

Auf diese Weise wird in sich geschlossene Antriebsvorrichtung mit einem Elektromotor, einem von dem Elektromotor angetriebenen Getriebe und einer Schaltungsanordnung zum Ansteuern des Elektromotors bereitgestellt, bei welcher diese Baugruppen äußerst kompakt, insbesondere in einem gemeinsamen Gehäuse, angeordnet werden können, wobei jedoch das Getriebe in einem separaten Getriebegehäuse untergebracht ist, so dass kein Schmiermittel, wie es gewöhnlich in derartigen Getrieben benutzt wird, zu der Schaltungsanordnung gelangen und damit den Betrieb der elektronischen Schaltung zum Ansteuern des Elektromotors beeinträchtigen kann. Darüber hinaus erlaubt die Nutzung der Gehäusewand des Getriebegehäuses als Kühlfläche für Komponenten der Schaltungsanordnung nicht nur, die Antriebsvorrichtung insgesamt kleiner und damit kompakter aufzubauen, da kein zusätzliches Kühlvolumen bereitgestellt werden muss, sondern ermöglicht, die Antriebsvorrichtung in gegenüber den bisher verwendeten Metalldruckgussgehäusen leichteren und einfacher herzustellenden Kunststoffgehäusen unterzubringen, die bisher aufgrund ihrer gegenüber Metallgehäusen niedrigen Wärmeleitfähigkeit problematisch hinsichtlich einer Überhitzung darin angeordneter Schaltungskomponenten waren.

Weitere bevorzugte Ausgestaltungen der Erfindung ergeben sich aus den Unteransprüchen.

Insbesondere kann das Kontaktieren der Schaltungsanordnung bzw. von Komponenten derselben mit der Gehäusewand mit jeglichen Mitteln erfolgen, die zwar Wärme gut leiten, die jedoch gleichzeitig elektrische Isolatoren sind. Als Beispiele für derartige Kontaktierungsmittel sind der Schaltungsanordnung zugeordnete Kühlfahnen zu nennen, sowie wärmeleitfähige Folien, die zwischen der Schaltungsanordnung und der Gehäusewand angeordnet werden, sei es in Form eines Füllkörpers oder als einzelne Fahnen, die auf einzelne zu kühlende Bauteile aufgebracht, beispielsweise aufgeklebt, werden, oder aber zwischen der Schaltungsanordnung und der Gehäusewand angeordnete wärmeleitfähige Schaumoder Faserkörper, beispielsweise aus wärmeleitfähigem, elektrisch isolierendem Werkstoff oder in Form eines Verbundelements, das aus einem wärmeleitfähigen, elektrisch leitenden Faserwerkstoff, beispielsweise Aluminiumfasern, und einer einseitig oder beidseitig aufgebrachten Isolatorschicht aufgebaut ist;

Vorzugsweise ist die Schaltungsanordnung in einem Elektronikgehäuse untergebracht ist, das gleichzeitig Teil des Getriebegehäuses ist. Hierbei kann das Elektronikgehäuse ein Unterteil, das gleichzeitig Teil des Getriebegehäuses ist, und einen Deckel aufweisen. Das Getriebegehäuse kann ferner einer Wandfläche des Elektronikgehäuses, einer einstückig mit der Wandfläche verbundenen Seitenwand und einer auf die Seitenwand aufgesetzten Abdeckung, die das Getriebegehäuse vorzugsweise dichtend verschließt, gebildet werden. Um das Gewicht der Antriebsvorrichtung möglichst gering zu halten, können hierbei das Elektronikgehäuse sowie das vorzugsweise mit diesem zumindest teilweise integrierte Getriebegehäuse aus Kunststoff gefertigt sein, wobei zur Bereitstellung einer Kühlfläche für Komponenten der Schaltungsanordnung zum Ansteuern des Elektromotors die Abdeckung aus einem metallischen Werkstoff gefertigt ist, mit welchem die zu kühlenden Komponenten kontaktiert sind.

In weiterer Ausgestaltung der Erfindung kann der Elektromotor eine in einem Wellengehäuse angeordnete Polwelle aufweisen, die mit dem Getriebe in Antriebsverbindung steht. Ebenso wie das Elektronikgehäuse und das Getriebegehäuse vorzugsweise zumindest teilweise integriert sind, ist zweckmäßig auch das Wellengehäuse mindestens teilweise in das Elektronikgehäuse integriert.

Eine besonders kompakte und dennoch gut zugängliche Antriebsvorrichtung ergibt sich, wenn das Elektronikgehäuse ein Unterteil aufweist, in das sowohl das Getriebegehäuse als auch das Wellengehäuse integriert sind, wobei das Getriebegehäuse und das Wellengehäuse von einer Wandfläche des Elektronikgehäuses, einer einstückig mit dieser Wandfläche verbundenen Seitenwand und einer auf die Seitenwand aufgesetzten, vorzugsweise gemeinsamen, Abdeckung gebildet werden, und wobei das Elektronikgehäuse ferner einen auf das Unterteil aufzusetzenden Deckel aufweist, der vorzugsweise Mittel zum Verrasten der Schaltungsanordnung aufweist.

Durch die (Teil-) Integration des Getriebegehäuses und des Wellengehäuses in das Elektronikgehäuse wird eine äußerst kompakte Antriebsvorrichtung erhalten, bei der durch die gegenseitige Integration der einzelnen Gehäuseabschnitte nicht nur Material und damit Gewicht eingespart, sondern gleichzeitig auch die Stabilität der gesamten Vorrichtung erhöht wird, insbesondere wenn es sich bei dem Unterteil sowie dem Deckel des Elektronikgehäuses um jeweils einstückige Formbauteile handelt, bei welchen dann die Unterteilungswände, d.h. die Seitenwand des Getriebegehäuses und die Seitenwand des Wellengehäuses, gleichzeitig als Verstärkungen der gesamten Anordnung dienen.

Ein bevorzugtes Ausführungsbeispiel der vorliegend vorgeschlagenen Antriebsvorrichtung wird nachstehend unter Bezugnahme auf die beigefügten Zeichnungen detailliert erläutert. Es zeigen:
- FIG. 1: eine schematische, auseinandergezogene perspektivische Ansicht einer erfindungsgemäßen Antriebsvorrichtung von schräg oben;
- FIG. 2: eine schematische, auseinandergezogene perspektivische Ansicht der Vorrichtung aus FIG. 1 von schräg unten;
- FIG. 3: eine schematische, perspektivische Ansicht des in FIG. 1 dargestellten Unterteils; und
- FIG. 4: eine schematische, perspektivische Ansicht der Antriebsvorrichtung nach den Figuren 1 bis 3, bei welcher der Antriebsmotor mitsamt der Polwelle aus dem Wellengehäuse herausgezogen ist.

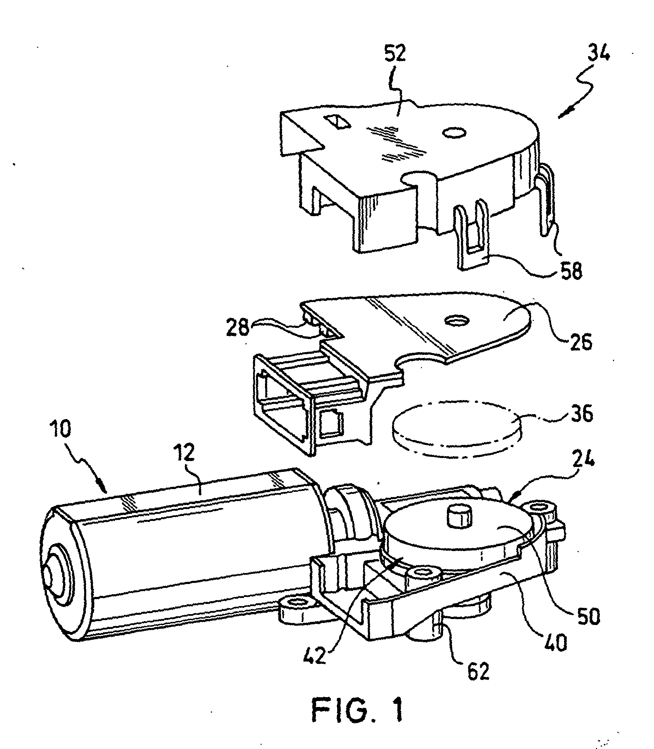

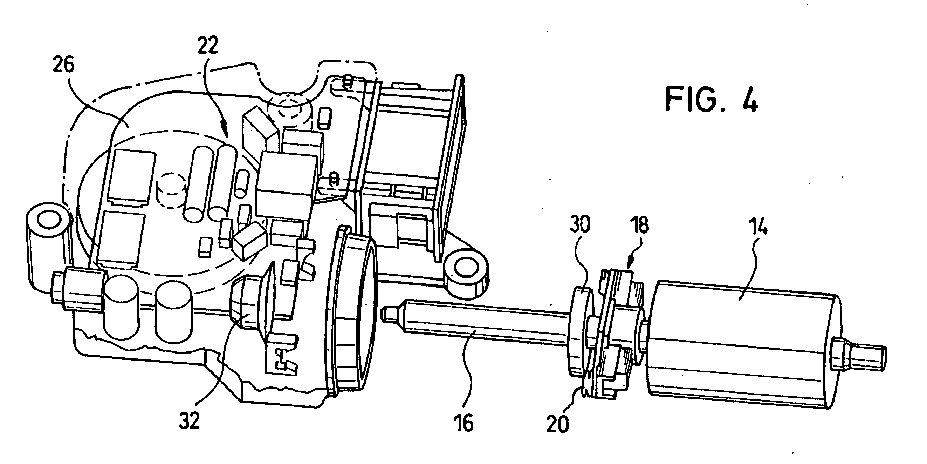

Die in den Figuren 1 bis 4 dargestellte Antriebsvorrichtung weist einen allgemein mit 10 bezeichneten Elektromotor auf, der einen von einem Poltopf 12 (siehe FIG. 1) umgebenen Anker 14 (siehe FIG. 4), eine Motor- bzw. Polwelle 16 sowie ein Bürstensystem 18 aufweist, welches über Motorkontakte 20 mit einer allgemein mit 22 bezeichneten elektronischen Schaltung zum Ansteuern des Motors versehen ist. Die Motorwelle 16 trägt in ihrem vorderen Bereich eine (nicht dargestellte) Schneckenwelle, welche mit einem Schneckenrad 24 kämmt. Der Begriff "trägt" soll hierbei sowohl eine als separates Bauteil ausgebildete Schneckenwelle als auch eine einstückig mit der Motorwelle 16 ausgebildete Schneckenwelle umfassen. Das so gebildete Untersetzungsgetriebe dient zum Antrieb eines verstellbaren Bauteils, insbesondere eines Deckelelements eines öffnungsfähigen Fahrzeugdaches, beispielsweise dem Deckel eines Schiebe- oder Schiebehebedaches oder eine Lamelle eines Lamellendaches.

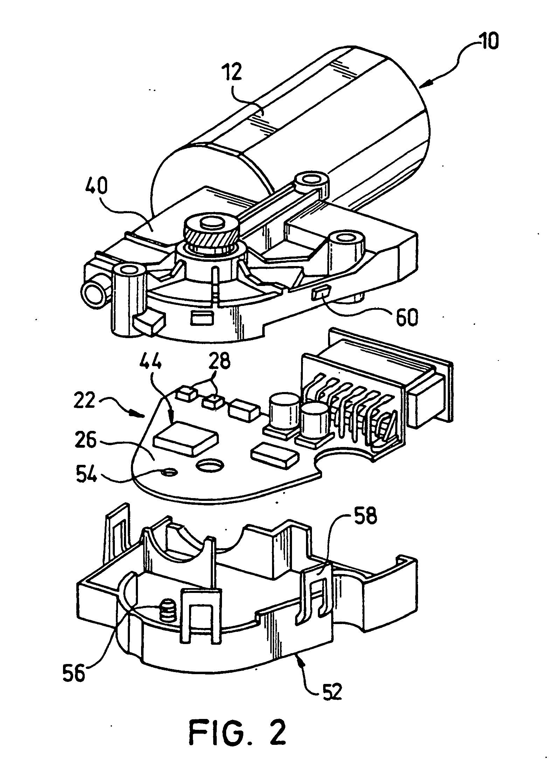

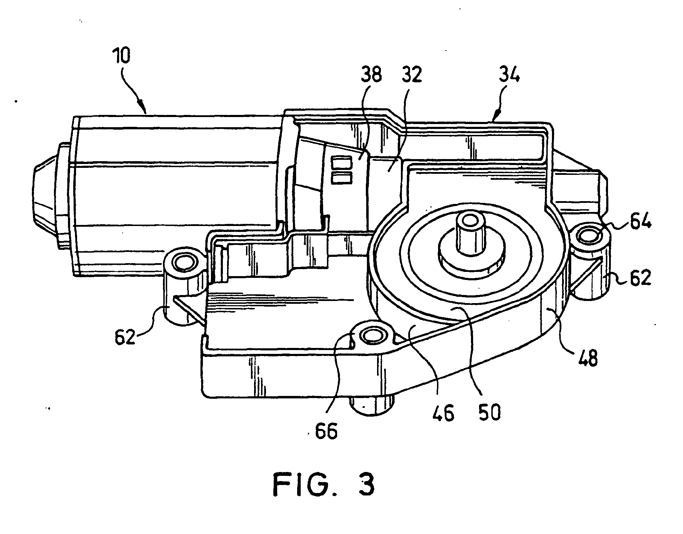

Die Ansteuerungselektronik 22 für den Motor 10 ist auf einer Leiterplatte oder Platine 26 untergebracht, die, wie es in den Figuren 1 und 2 dargestellt ist, sich über das Schneckenrad hinweg erstreckt. Auf der Platine 26 sind vorzugsweise ferner zwei Hall-Sensoren 28 angeordnet, um durch Erfassen des von einem auf der Polwelle 16 angeordneten Magnetrad 30 ausgehenden Magnetfelds die Drehstellung des Magneten und damit der Polwelle zu erfassen. Um den Bauraum der elektronischen Schaltung zum Ansteuern des Motors 10 möglichst gering zu halten, ist die Platine 26 vorzugsweise beidseitig mit Bauelementen 44, insbesondere SMD-Bauteilen, bestückt. Wie insbesondere aus den Figuren 3 und 4 hervorgeht, ist die Polwelle 16 im fertig montierten Zustand der Antriebsvorrichtung innerhalb eines Wellengehäuses 32 angeordnet, dessen in FIG. 3 nach oben weisende Seite gleichzeitig Teil der Unterseite des die Elektronik 22 aufnehmenden, mit 34 bezeichneten Elektronikgehäuses ist, und das vorzugsweise aus Kunststoff gefertigt ist. Wie insbesondere der FIG. 3 zu entnehmen ist, ist die Polwelle 16 derart von dem Wellengehäuse 32 umschlossen, dass zwischen dem Wellengehäuse 32 und dem Elektronikgehäuse 34 keine Verbindungsöffnung besteht, durch die beispielsweise ein Schmiermittel der Polwelle 16 zu der Platine 26 hin austreten könnte.

Unter erneuter Bezugnahme auf die Figuren 1 und 2 bildet das Elektronikgehäuse 34, und zwar insbesondere das mit dem Motor 10 verbundene Unterteil 40, gleichzeitig das Unterteil eines Getriebegehäuses 42, in welchem das mit der Polwelle 16 kämmende Schneckenrad 24 untergebracht ist. Zu diesem Zweck weist das Elektronikgehäuse 34 eine das Schneckenrad 24 umgebende Wandung 46 auf, wobei das somit von der Unterseite des Elektronikgehäuses 34, der Wandung 46 und einem Teil der Seitenwand 48 des Elektronikgehäuses 34 gebildete Unterteil des Getriebegehäuses mittels eines Deckels 50 gegenüber dem verbleibenden Innenraum des Elektronikgehäuses 34 verschlossen wird. Der Deckel 50 ist aus einem Werkstoff mit hoher Wärmeleitfähigkeit, insbesondere einem metallischen Werkstoff gefertigt und dient als Kühlfläche für die auf der Platine 26 sitzenden und im fertig montierten Zustand der Antriebsvorrichtung in unmittelbarer Nähe zu dem Deckel 50 angeordneten Schaltungselemente. Um eine effektive Wärmeableitung von den zu kühlenden Schaltungselementen auf den Deckel 50 zu gewährleisten, werden die betreffenden Schaltungselemente mittels der Schaltungsanordnung zugeordneten Kühlfahnen, wärmeleitfähigen Folien, oder, wie es in FIG. 1 angedeutet ist, mittels eines zwischen der Schaltungsanordnung und der Gehäusewand angeordneten wärmeleitfähigen, jedoch elektrisch isolierenden Schaum- oder Faserkörpers 36 mit dem Deckel 50 kontaktiert.

Unter Ausnutzung der Kühlwirkung des Deckels 50 lässt sich die Schaltungsanordnung zum Ansteuern des Elektromotors in einem Kunststoffgehäuse unterbringen, dessen Wärmeableitung ohne eine derartige Zusatzkühlung zu gering wäre, um einen störungsfreien Betrieb der Antriebsvorrichtung auch dann zu gewährleisten, wenn die Antriebsvorrichtung über eine dass übliche Maß übersteigende Dauer betätigt wird, beispielsweise wiederholt umgesteuert wird (z.B. bei Verwendung zum Antrieb eines Deckel eine öffnungsfähigen Fahrzeugdachs der Deckel in kurzen Zeitabständen wiederholt geöffnet und geschlossen wird), ohne dass zwischen den einzelnen Ansteuerungsphasen ausreichend lange Abkühlpausen liegen.

Darüber hinaus ergibt sich durch die hier vorgeschlagene Unterteilung des Elektronikgehäuses 34 in mehrere, in sich geschlossene Gehäuseabschnitte, eine äußerst kompakte Ausgestaltung der Antriebsvorrichtung, in welcher alle zum Verstellen einer anzutreibenden Vorrichtung erforderlichen Komponenten untergebracht sind, in welcher jedoch die einzelnen Baugruppen räumlich voneinander getrennt angeordnet sind, und insbesondere der die Polwelle und das Getriebe umfassende mechanische Teil der Antriebsvorrichtung von dem die elektronische Schaltung umfassenden elektrischen Teil der Antriebsvorrichtung dichtend getrennt ist, so dass aus dem mechanischen Teil keine Schmiermittel in den elektrischen Teil gelangen können, was zu einer temporären oder gar dauerhaften Beeinträchtigung der Funktion elektrischer oder elektronischer Komponenten führen könnte.

Zur Erleichterung der Montage der Antriebsvorrichtung ist der Deckel 52 des Elektronikgehäuses 34 vorzugsweise so ausgestaltet, dass die Platine 26 in den Deckel eingelegt und dort verrastet werden kann. Zu diesem Zweck kann, wie es in FIG. 2 dargestellt ist, die Platine 26 beispielsweise Durchbrüche 54 aufweisen, durch die sich beim Einsetzen der Platine 26 in den Deckel 52 an dem Deckel vorgesehene Rastvorsprünge 56 hindurch erstrecken, welche die Platine in dem Deckel zu verrasten. Zur Befestigung des Deckels 52 an dem Gehäuseunterteil 40 sind ebenfalls vorzugsweise Rastverbinder vorgesehen. Beispielsweise können, wie es in den Figuren 1 und 2 gezeigt ist, Clips-Elemente 58 vorgesehen sein, die in entsprechende an dem Unterteil 40 ausgebildete Rastvorsprünge 60 einrasten, wenn der Deckel 52 auf das Unterteil 40 aufgesetzt wird. Zur Befestigung der Antriebsvorrichtung beispielsweise in einem Fahrzeug sind an dem Elektronikgehäuse 34 Durchführungen 62 vorgesehen, durch die (nicht dargestellte) Befestigungsmittel, z.B. Gewindeschrauben, hindurchgesteckt werden können, um die Antriebsvorrichtung ortsfest zu befestigen. Wie in FIG. 3 zu sehen ist, sind in den Durchführungen 62 metallische Verstärkungshülsen 64 vorgesehen, deren Länge auf die Länge der Durchführungen abgestimmt ist, um eine Kompressionsbeanspruchung des die Durchführungen bildenden Werkstoffes beim Anziehen der Befestigungsschrauben zu verhindern. Die Durchführungen 62 sind alle entlang dem Außenumfang des Elektronikgehäuses 34 angeordnet und sind in den Seitenrand 38 desselben integriert. Um die Festigkeit des Gehäuses und insbesondere der Befestigungspunkte des Gehäuses noch weiter zu erhöhen, kann mindestens eine der Durchführungen 62 innerhalb des Außenumrisses des Elektronikgehäuses angeordnet sein, wie dies bei 66 in FIG. 3 angedeutet ist.

Wie sich aus der vorstehenden Beschreibung ergibt, stellt die hier vorgeschlagene Antriebsvorrichtung einer äußerst kompakte und in sich geschlossene Vorrichtung dar. Unter Zuhilfenahme der hier erläuterten Maßnahmen kann das Elektronikgehäuse, in welches vorzugsweise das Wellengehäuse und das Getriebegehäuse mindestens teilweise integriert werden, aus Kunststoff gefertigt werden, so dass sich nicht nur der zum Unterbringen der Antriebsvorrichtung benötigte Bauraum sondern auch das Gesamtgewicht der Antriebsvorrichtung ohne nachteilige Einflüsse auf die Betriebszuverlässigkeit der Vorrichtung reduzieren lässt.

### Bezugszeichenliste

- 10: Elektromotor
- 12: Poltopf
- 14: Anker
- 16: Polwelle
- 18: Bürstensystem
- 20: Motorkontakte
- 22: Ansteuerungselektronik
- 24: Schneckenrad
- 26: Platine
- 28: Hall-Sensoren
- 30: Magnetrad
- 32: Wellengehäuse
- 34: Elektronikgehäuse
- 36: Kontaktierung
- 38: Wand zwischen 32 und 34
- 40: Unterteil von 34
- 42: Getriebegehäuse
- 44: elektronische Bauelemente
- 46: Wandung von 42
- 48: Seitenwand von 34
- 50: Deckel von 42
- 52: Deckel
- 54: Durchbruch in 34
- 56: Rastvorsprung
- 58: Clipselement
- 60: Rastvorsprung

- 62: Durchführung
- 64: Verstärkungshülse
- 66: innen liegende Durchführung

## Patentansprüche

1. Antriebsvorrichtung, insbesondere zum Verstellen eines Schiebedachs eines Fahrzeugs, mit einem Elektromotor (10), einem von dem Elektromotor angetriebenen Getriebe (24) und einer zumindestens teilweise auf einer Platine (26) angeordneten Schaltungsanordnung (22) zum Ansteuern des Elektromotors, wobei das Getriebe (24) in einem Getriebegehäuse (42) mit mindestens einer Gehäusewand (50) mit hoher Wärmeleitfähigkeit untergebracht ist und mindestens ein Teil der Schaltungsanordnung (22) benachbart dieser Gehäusewand (50) angeordnet ist, wobei ferner zwischen Komponenten (44) der Schaltungsanordnung (22) und der Gehäusewand (50) eine Kontaktierung (36) vorgesehen ist, um bei dem Betrieb der Schaltungsanordnung (22) entstehende Wärme an die Gehäusewand (50) abzuführen **dadurch gekennzeichnet, dass** die Gehäusewand von einem Deckel (50) des Getriebegehäuses (42) gebildet wird, der die außerhalb des Getriebegehäuses (42) in einem Elektronikgehäuse (34) angeordnete Platine (26) vom Getriebegehäuse (42) dichtend trennt und als Kühlfläche für die auf der Platine (26) sitzenden, im fertig montierten Zustand in unmittelbarer Nähe zum Deckel (50) angeordneten Schaltungselemente (44) dient.

2. Antriebsvorrichtung nach Anspruch 1, **dadurch gekennzeichnet, dass** zum Kontaktieren von Komponenten (44) der Schaltungsanordnung (22) mit dem Deckel (50) eine wärmeleitfähige Folie eingesetzt wird.

3. Antriebsvorrichtung nach Anspruch 1, **dadurch gekennzeichnet, dass** zum Kontaktieren von Komponenten (44) der Schaltungsanordnung (22) mit dem Deckel (50) ein wärmeleitfähiger Schaum- oder Faserkörper (36) zwischen der Schaltungsanordnung (22) und der Gehäusewand (50) angeordnet wird.

4. Antriebsvorrichtung nach Anspruch 1, **dadurch gekennzeichnet, dass** die Schaltungsanordnung (22) Kühlfahnen aufweist, um Wärme an den Dekkel (50) abzuführen.

5. Antriebsvorrichtung nach einem der vorhergehenden Ansprüche, **dadurch gekennzeichnet, dass** das Elektronikgehäuse (34) ein Unterteil (40) und einen Deckel (52) aufweist, und das Unterteil gleichzeitig Teil des Getriebegehäuses (42) ist.

6. Antriebsvorrichtung nach Anspruch 5, **dadurch gekennzeichnet, dass** der Deckel (52) Mittel (56) zum Verrasten der Schaltungsanordnung (22) aufweist.

7. Antriebsvorrichtung nach Anspruch 5 oder 6, **dadurch gekennzeichnet, dass** das Getriebegehäuse (42) von einer Wandfläche des Elektronikgehäuses (34), einer einstückig mit der Wandfläche verbundenen Seitenwand (46) und dem auf die Seitenwand aufgesetzten Deckel (50) gebildet wird.

8. Antriebsvorrichtung nach einem der Ansprüche 5 bis 7, **dadurch gekennzeichnet, dass** das Elektronikgehäuse (34) aus Kunststoff gefertigt ist.

9. Antriebsvorrichtung nach einem der vorhergehenden Ansprüche, **dadurch gekennzeichnet, dass** der Deckel (50) mit hoher Wärmeleitfähigkeit aus einem metallischen Werkstoff gefertigt ist.

10. Antriebsvorrichtung nach einem der vorhergehenden Ansprüche, **dadurch gekennzeichnet, dass** das Getriebe ein Schneckengetriebe mit einem Schneckenrad (24) ist und die Schaltungsanordnung (22) das Schneckenrad (24) zumindest teilweise übergreift.

11. Antriebsvorrichtung nach Anspruch 10, **dadurch gekennzeichnet, dass** die Schaltungsanordnung (22) das Schneckenrad (24) im wesentlichen vollständig übergreift.

12. Antriebsvorrichtung nach einem der vorhergehenden Ansprüche, **dadurch gekennzeichnet, dass** der Elektromotor (10) eine in einem Wellengehäuse (32) angeordnete Polwelle (16) aufweist, die mit dem Getriebe (24) in Antriebsverbindung steht.

13. Antriebsvorrichtung nach den Ansprüchen 1 und 12, **dadurch gekennzeichnet, dass** das Wellengehäuse (32) mindestens teilweise in das Elektronikgehäuse (34) integriert ist.

14. Antriebsvorrichtung nach den Ansprüchen 5 und 13, **dadurch gekennzeichnet, dass** das Wellengehäuse (32) mindestens teilweise in das Unterteil (40) des Elektronikgehäuses (34) integriert ist.

15. Antriebsvorrichtung nach einem der Ansprüche 12 bis 14, **dadurch gekennzeichnet, dass** das Wellengehäuse (32) von einer Wandfläche des Elektronikgehäuses (34), einer einstückig mit der Wandfläche verbundenen Seitenwand und dem auf die Seitenwand aufgesetzten Deckel (50) gebildet.

16. Antriebsvorrichtung nach den Ansprüchen 7 und 15, **dadurch gekennzeichnet, dass** die Abdeckung des Wellengehäuses (32) und die Abdekkung des Getriebegehäuses (42) von einem gemeinsamen Deckel (50) gebildet werden.

## Claims

1. Driving device, in particular for displacing a sliding roof of a vehicle, having an electric motor (10), a gearbox (24) driven by the electric motor, and a circuit arrangement (22), at least partly arranged on a circuit board (26), for driving the electric motor, the gearbox (24) being accommodated in a gearbox housing (42) having at least one housing wall (50) with a high thermal conductivity, and at least part of the circuit arrangement (22) being arranged adjacent to this housing wall (50), a means of making contact (36) also being arranged between components (44) of the circuit arrangement (22) and the housing wall (50), in order to dissipate heat produced during the operation of the circuit arrangement (22) to the housing wall (50), **characterized in that** the housing wall is formed by a cover (50) of the gearbox housing (42), which separates the circuit board (26) arranged outside the gearbox housing (42) in an electronics housing (34) from the gearbox housing (42) in a sealed manner and serves as a cooling surface for the circuit elements (44) situated on the circuit board (26) and, in the finally mounted state, arranged in the immediate vicinity of the cover (50).

2. Driving device according to Claim 1, **characterized in that**, in order to make contact between components (44) of the circuit arrangement (22) and the cover (50), a thermally conductive foil is used.

3. Driving device according to Claim 1, **characterized in that**, in order to make contact between components (44) of the circuit arrangement (22) and the cover (50), a thermally conductive foam or fibrous body (36) is arranged between the circuit arrangement (22) and the housing wall (50).

4. Driving device according to Claim 1, **characterized in that** the circuit arrangement (22) has cooling fins in order to dissipate heat to the cover (50).

5. Driving device according to one of the preceding claims, **characterized in that** the electronics housing (34) has a lower part (40) and a cover (52), and the lower part is simultaneously part of the gearbox housing (42).

6. Driving device according to Claim 5, **characterized in that** the cover (52) has means (56) for latching the circuit arrangement (22).

7. Driving device according to Claim 5 or 6, **characterized in that** the gearbox housing (42) is formed by a wall surface of the electronics housing (34), a side wall (46) connected in one piece to the wall surface, and the cover (50) placed on the side wall.

8. Driving device according to one of Claims 5 to 7, **characterized in that** the electronics housing (34) is fabricated from plastic.

9. Driving device according to one of the preceding claims, **characterized in that** the cover (50) with high thermal conductivity is fabricated from a metallic material.

10. Driving device according to one of the preceding claims, **characterized in that** the gearbox is a worm gear mechanism having a worm gear (24), and the circuit arrangement (22) reaches at least partly over the worm gear (24).

11. Driving device according to Claim 10, **characterized in that** the circuit arrangement (22) reaches substantially completely over the worm gear (24).

12. Driving device according to one of the preceding claims, **characterized in that** the electric motor (10) has a pole shaft (16) which is arranged in a shaft housing (32) and which has a drive connection to the gearbox (24).

13. Driving device according to Claims 1 and 12, **characterized in that** the shaft housing (32) is at least partly integrated into the electronics housing (34).

14. Driving device according to Claims 5 and 13, **characterized in that** the shaft housing (32) is at least partly integrated into the lower part (40) of the electronics housing (34).

15. Driving device according to one of Claims 12 to 14, **characterized in that** the shaft housing (32) is formed by a wall surface of the electronics housing (34), a side wall connected in one piece to the wall surface, and the cover (50) placed on the side wall.

16. Driving device according to Claims 7 and 15, **characterized in that** the covering of the shaft housing (32) and the covering of the gearbox housing (42) are formed by a common cover (50).

## Revendications

1. Dispositif d'entraînement, notamment pour déplacer un toit coulissant de véhicule, comprenant un moteur électrique (10), une transmission (24) menée par ledit moteur électrique et un ensemble de commutation (22) monté au moins partiellement sur une platine (26), et conçu pour activer le moteur électrique, sachant que la transmission (24) est logée dans un carter (42) doté d'au moins une paroi (50) présentant une haute conductivité thermique, au moins une partie de l'ensemble de commutation (22) étant située au voisinage de cette paroi (50) du carter ; et sachant qu'une pièce de contact (36) est par ailleurs prévue entre ladite paroi (50) du carter et des composants (44) de l'ensemble de commutation (22), afin de dissiper, au niveau de ladite paroi (50) du carter, de la chaleur générée lors du fonctionnement dudit ensemble de commutation (22), **caractérisé par le fait que** la paroi du carter est matérialisée par un couvercle (50) dudit carter (42) de la transmission, qui assure une séparation étanche entre ledit carter (42) et la platine (26) implantée à l'extérieur dudit carter (42), dans un boîtier électronique (34), et sert de surface de refroidissement affectée aux éléments de commutation (44) reposant sur la platine (26) et placés, à l'état de montage définitif, à proximité directe dudit couvercle (50).

2. Dispositif d'entraînement selon la revendication 1, **caractérisé par le fait qu'**un feuil thermoconducteur est intégré afin d'établir un contact entre le couvercle (50) et des composants (44) de l'ensemble de commutation (22).

3. Dispositif d'entraînement selon la revendication 1, **caractérisé par le fait qu'**un corps thermoconducteur (36), en une mousse ou en des fibres, est interposé entre l'ensemble de commutation (22) et la paroi (50) du carter, afin d'établir un contact entre le couvercle (50) et des composants (44) dudit ensemble de commutation (22).

4. Dispositif d'entraînement selon la revendication 1, **caractérisé par le fait que** l'ensemble de commutation (22) comporte des languettes de refroidissement, afin de dissiper de la chaleur au niveau du couvercle (50).

5. Dispositif d'entraînement selon l'une des revendications précédentes, **caractérisé par le fait que** le boîtier électronique (34) comprend une pièce inférieure (40) et un capot (52), et ladite pièce inférieure fait simultanément partie du carter (42) de la transmission.

6. Dispositif d'entraînement selon la revendication 5, **caractérisé par le fait que** le capot (52) présente des moyens (56) de crantage de l'ensemble de commutation (22).

7. Dispositif d'entraînement selon la revendication 5 ou 6, **caractérisé par le fait que** le carter (42) de la transmission est matérialisé par une surface de paroi du boîtier électronique (34), par une paroi latérale (46) reliée d'un seul tenant à ladite surface de paroi, et par le couvercle (50) mis en place sur ladite paroi latérale.

8. Dispositif d'entraînement selon l'une des revendications 5 à 7, **caractérisé par le fait que** le boîtier électronique (34) est fabriqué en une matière synthétique.

9. Dispositif d'entraînement selon l'une des revendications précédentes, **caractérise par le fait que** le couvercle (50) est fabriqué avec haute conductivité thermique, en un matériau métallique.

10. Dispositif d'entraînement selon l'une des revendications précédentes, **caractérisé par le fait que** la transmission est une transmission à vis sans fin à roue hélicoïdale (24), et l'ensemble de commutation (22) coiffe au moins partiellement ladite roue hélicoïdale (24).

11. Dispositif d'entraînement selon la revendication 10, **caractérisé par le fait que** l'ensemble de commutation (22) coiffe pour l'essentiel intégralement la roue hélicoïdale (24).

12. Dispositif d'entraînement selon l'une des revendications précédentes, **caractérisé par le fait que** le moteur électrique (10) présente un arbre polaire (16) logé dans un carter (32) et en liaison d'entraînement avec la transmission (24).

13. Dispositif d'entraînement selon les revendications 1 et 12, **caractérisé par le fait que** le carter (32) de l'arbre est intégré, au moins partiellement, dans le boîtier électronique (34).

14. Dispositif d'entraînement selon les revendications 5 et 13, **caractérisé par le fait que** le carter (32) de l'arbre est intégré, au moins partiellement, dans la pièce inférieure (40) du boîtier électronique (34).

15. Dispositif d'entraînement selon l'une des revendications 12 à 14, **caractérisé par le fait que** le carter (32) de l'arbre est matérialisé par une surface de paroi du boîtier électronique (34), par une paroi latérale reliée d'un seul tenant à ladite surface de paroi, et par le couvercle (50) mis en place sur ladite paroi latérale.

16. Dispositif d'entraînement selon les revendications 7 et 15, **caractérisé par le fait que** la coiffe du carter (32) de l'arbre, et la coiffe du carter (42) de la transmission, sont formées d'un couvercle commun (50).
